# EUROPEAN PATENT APPLICATION

(11) **EP 4 822 271 A1**
(43) Date of publication of application: **14.10.2026**
(21) Application number: 26167723.1
(22) Date of filing: 25.03.2026
(51) Int. Cl.: F25B 13/00, B60H 1/00, F25B 41/42, F25B 49/02

(54) **THERMAL MANAGEMENT SYSTEM WITH FLUID CIRCUIT FOR ENERGY STORAGE DEVICE IN AIR CONDITIONING SYSTEM**

(30) Priority: 26.03.2025 US 202563777919 P; 01.04.2025 US 202563781570 P
(71) Applicant: Carrier Corporation, Palm Beach Gardens, FL 33418 (US)
(72) Inventor: GAO, Xiangyu, Shanghai, 201206 (CN); YU, Lei, Shanghai, 201206 (CN); YU, Zehang, Shanghai, 201206 (CN)
(74) Representative: Dehns

(57) **Abstract**

A system includes an air conditioning system (502) including: a first unit (200) having a compressor (242) and a first heat exchanger (508); a second unit (250) having a second heat exchanger (514); the air conditioning system (502) configured to circulate a refrigerant between the first unit (200) and the second unit (250); an energy storage device (240) configured to power the compressor (242); a controller (220); and a thermal management system (600) having a third heat exchanger (602), the third heat exchanger (602) configured to receive refrigerant from the air conditioning system (502) in certain modes of operation; the thermal management system (600) configured to supply fluid to the energy storage device to provide one of heating and cooling of the energy storage device.

## Description

### BACKGROUND

The embodiments described herein relate to air conditioning systems.

Air conditioning systems (e.g., heating, cooling, ventilation, humidity control, etc.) are typically electrically powered. The use of energy storages systems, such as batteries or capacitors, in air conditioning systems has been proposed. For example, published international application number WO2024263731, in the name of Carrier Corporation, describes self-powered air conditioning systems including an energy storage device. Energy storages systems, such as batteries, benefit from temperature control to maintain the battery within a desired temperature range.

### SUMMARY

In accordance with an aspect of the invention, a system includes an air conditioning system including: a first unit having a compressor and a first heat exchanger; a second unit having a second heat exchanger; the air conditioning system configured to circulate a refrigerant between the first unit and the second unit; an energy storage device configured to power the compressor; a controller; and a thermal management system having a third heat exchanger, the third heat exchanger configured to receive refrigerant from the air conditioning system in certain modes of operation; the thermal management system configured to supply fluid to the energy storage device to provide one of heating and cooling of (to) the energy storage device.

In any of the aspects or embodiments described above or herein, the fluid may be a liquid, and the third heat exchanger may be a liquid-to-refrigerant heat exchanger having a fluid pass and a refrigerant pass.

In any of the aspects or embodiments described above or herein, the thermal management system may include a pump and a fourth heat exchanger, wherein the pump circulates the liquid between the liquid pass of the third heat exchanger and the fourth heat exchanger.

In any of the aspects or embodiments described above or herein, the system may comprise a first conduit connecting the refrigerant pass to a first pipe of the air conditioning system; a second conduit connecting the refrigerant pass to a second pipe of the air conditioning system; and a (third) expansion device positioned in the first conduit.

In any of the aspects or embodiments described above or herein, the controller may be configured to operate the system to cool the energy storage device and provide cooling at the second unit.

In any of the aspects or embodiments described above or herein, the controller may be configured to operate the system to heat the energy storage device and provide heating at the second unit.

In any of the aspects or embodiments described above or herein, the system may comprise a first conduit connecting the refrigerant pass to a first pipe of the air conditioning system; a second conduit connecting the refrigerant pass to a suction port of the compressor; and a (third) expansion device positioned in the first conduit.

In any of the aspects or embodiments described above or herein, the thermal management system may include an electric heater configured to heat the liquid circulating between the fourth heat exchanger and the third heat exchanger.

In any of the aspects or embodiments described above or herein, the controller may be configured to operate the system to cool the energy storage device and provide cooling at the second unit.

In any of the aspects or embodiments described above or herein, the controller may be configured to operate the system to heat the energy storage device and provide cooling at the second unit.

In any of the aspects or embodiments described above or herein, the controller may be configured to operate the system to cool the energy storage device and provide heating at the second unit.

In any of the aspects or embodiments described above or herein, the controller may be configured to operate the system to heat the energy storage device and provide heating at the second unit.

In any of the aspects or embodiments described above or herein, the fluid may be air, and the third heat exchanger may be an air-to-refrigerant heat exchanger having a refrigerant pass.

In any of the aspects or embodiments described above or herein, the thermal management system may include a fan, wherein the fan directs air over the third heat exchanger and towards the energy storage device.

In any of the aspects or embodiments described above or herein, the thermal management system may include an electric heater.

In any of the aspects or embodiments described above or herein, the controller may be configured to operate the system to cool the energy storage device and provide cooling at the second unit.

In any of the aspects or embodiments described above or herein, the controller may be configured to operate the system to heat the energy storage device and provide cooling at the second unit.

In any of the aspects or embodiments described above or herein, the controller may be configured to operate the system to cool the energy storage device and provide heating at the second unit.

In any of the aspects or embodiments described above or herein, the controller may be configured to operate the system to heat the energy storage device and provide heating at the second unit.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 depicts a system in an example embodiment.
FIG. 2 depicts a controller in an example embodiment.
FIG. 3 depicts an electrical architecture in an example embodiment.
FIG. 4 depicts a side discharge first unit with an integrated energy storage device in an example embodiment.
FIG. 5 depicts a top discharge first unit with an integrated energy storage device in an example embodiment.
FIGs. 6-13 depict an air conditioning systems including a temperature management system using a fluid circuit for controlling temperature of an energy storage device.

### DETAILED DESCRIPTION

Embodiments described herein relate to air conditioning systems that include electrical energy storage system(s) (e.g., batteries, capacitors, supercapacitors) to provide power in addition to, or in place of, an electrical power grid. The entire contents of published international application number WO2024263731 are incorporated herein by reference.

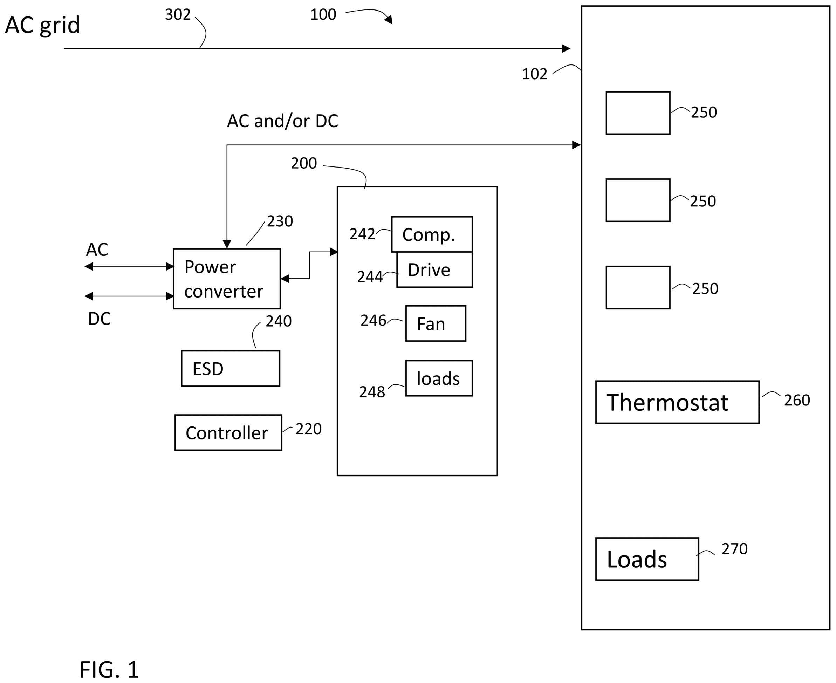

FIG. 1 depicts a system 100 in an example embodiment. The system 100 includes components of an air conditioning system. The phrase "air conditioning" is intended to include one or more of heating, cooling, ventilation, humidification, dehumidification, refrigeration, hot water heating, chilling water or fluid, air filtration, and other known air processing operations, or a combination of any of the above. The air conditioning system may include known types of systems such as heat pumps, geothermal heat pumps, chillers, split systems, packaged systems, all-in-one systems, etc. The air conditioning system 100 includes a first unit 200 and one or more second units 250. Depending on the nature of the air conditioning system, the first unit 200 and the second unit(s) 250 may be separately located (indoors or outdoors) or co-located (indoors or outdoors). For example, in a split system, the first unit 200 is an outdoor unit (e.g., compressor and heat exchanger) and the second unit(s) 250 are indoor units (e.g., expansion mechanisms, heat exchangers). In a packaged system (e.g., rooftop or ground), the first unit 200 and the second unit 250 are co-located in a single footprint outside a building. In a chiller, the first unit 200 and the second unit 250 may be co-located (both indoor or outdoor) or separately located. Certain all-in-one systems may have the first unit 200 and the second unit 250 co-located inside a building.

In the example shown in FIG. 1, the first unit 200 may be an outdoor unit of a split system located on ground level next to a building 102, on a rooftop of the building 102 or any other location. The second unit(s) 250 may be located inside the building 102, as is common with split systems. It is understood that FIG. 1 is one example, and embodiments are not limited to split systems.

The system 100 may be a variable refrigerant flow (VRF) system that employs a single first unit 200 (e.g., outdoors) and a plurality of second units 250 (e.g., indoors) to provide air conditioning (e.g., heating and/or cooling, etc.) to various indoor zones, with the ability to adjust the refrigerant flow to each zone based on individual temperature needs.

The system 100 includes a controller 220, a power converter 230 and an energy storage device (ESD) 240. FIG. 1 is an example embodiment, and the location of components is not limited to that shown in FIG. 1. For example, the power converter 230, energy storage device 240 and controller 220 may be separate from the first unit 200, which houses the compressor 242, drive 244, fan 246 and load(s) 248. The first unit 200 may include a control unit (not shown) for controlling operation of the first unit 200. This allows components of the described embodiments to be retrofit to existing first units 200 of air conditioning systems and/or second units 250 of air conditioning systems. One or more of the power converter 230, energy storage device 240 and controller 220 may be located in the first unit 200. One or more of the power converter 230, energy storage device 240 and controller 220 may be located adjacent to or outside the first unit 200. One or more of the power converter 230, energy storage device 240 and controller 220 may be located in building 102.

The first unit 200 may include a heat exchanger (not shown) that will serve as a condenser/gas cooler and/or as an evaporator, as part of a vapor compression refrigeration cycle.

In the FIGURES, the locations of all components in the drawings are examples, and embodiments include modification of the locations of components shown in the drawings. For example, components illustrated as connected to the first unit 200, may be retrofit components added to an existing first unit 200. Although shown as separate boxes, elements may be joined into sub-assemblies and assemblies, anywhere in the system, indoor or outdoor, without departing from embodiments of the disclosure.

The controller 220 may communicate with an air conditioning system controller and/or an energy storage device controller. In some embodiments, a single controller may implement all the functions of the controller 220, air conditioning controller and energy storage device controller. The controller 220 communicates with components of the described systems using wired and/or wireless connections, which are not illustrated in the drawings.

The system of FIG. 1, and embodiments thereof described herein, allow for one or more components of the air conditioning system, and other loads not associated with the air conditioning system, to be powered solely by an AC power grid 302, powered solely by the energy storage device 240, and powered by both the AC power grid 302 and the energy storage device 240, in conjunction. The one or more components of the air conditioning system include components in the first unit 200 and components in the second unit 250.

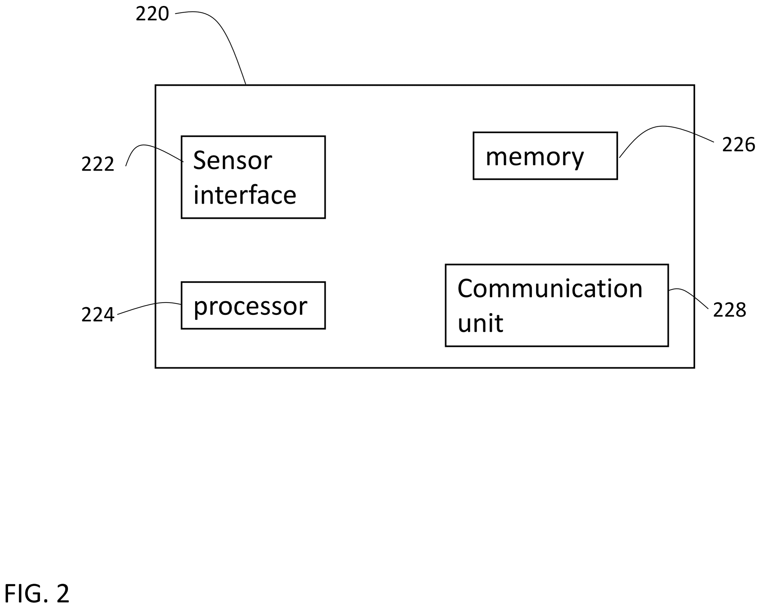

FIG. 2 depicts the controller 220 in accordance with an embodiment. The controller 220 includes a sensor interface 222 that can obtain operational parameters of the air conditioning system, such as pressures, temperatures, etc. As known in the art, the controller 220 can adjust operation of the air conditioning system based on sensed operational parameters. The controller 220 includes a processor 224 that controls operation of the system 100. The processor 224 may be implemented using a general-purpose microprocessor executing a computer program stored on a storage medium to perform the operations described herein. Alternatively, the processor 224 may be implemented in hardware (e.g., ASIC, FPGA) or in a combination of hardware/software. The processor 224 allows the controller 220 to perform computations locally, also referred to as edge computing. The processor 224 can send commands to other components of the air conditioning system 100 based on a result of the local computations.

The controller 220 includes a memory 226 that may store a computer program executable by the processor 224, reference data, sensor data, etc. The memory 226 may be implemented using known devices, such as random access memory. The controller 220 includes a communication unit 228 which allows the controller 220 to communicate with other components of the system 100, such as first unit 200, second units 250 and a thermostat 260. The communication unit 228 may be implemented using wired connections (e.g., LAN, ethernet, twisted pair, etc.) and/or wireless connections (e.g., Wi-Fi, near field communications ("NFC"), Bluetooth, etc.).

In some embodiments, communication unit 228 may provide high-speed data communications over existing wiring systems and/or communication with newer equipment having a high-speed bus, while maintaining communications with existing equipment (e.g., having RS-485 communications bus). In some embodiments, an HVAC equipment may include 4 wires used for data communications, Power, Ground, Data+, and Data-. Of these lines, Data+ and Data- are used to carry the low-speed, standard RS-485 data. The power line is used to power the wall control and comes from a second unit 250. This same power line is carried to the first unit 200 although it is generally not used. The ability to take advantage of the power and ground lines of the 4-wire system (referred to as "Power Line Communications" (PLC) technology) allows digital/data signals to be sent over power lines. In some embodiments, PLC technology may allow for data transmission at or near gigabit speed rates using standard 2-conductor wiring. This includes the 2 wires represented by Power and Ground of the HVAC equipment. It should be appreciated that other data transmission speeds may be possible. In some embodiments, the communication unit 228 of the present disclosure may be configured such that, while the PLC high-speed communication is occurring over the Power and Ground line of the 4-wire system, the low-speed RS-485 communication can also be occurring on the Data+ and Data- lines. In some embodiments, the ability to use high speed communications or a combination of high speed and low speed communications enable the controller 220 to utilize machine-learning (ML) based or artificial intelligence (AI) based, algorithms. In some embodiments, the high speed and low speed communications may occur approximately simultaneously (e.g., within milliseconds of one another). This may allow the standard HVAC wire to communicate with both RS-485 controlled equipment as well as HVAC equipment which contains the additional PLC transceivers. This may be advantageous because both new high-speed HVAC equipment and existing RS-485 HVAC equipment can co-exist on existing wiring of the building.

Referring to FIG. 1, the power converter 230 is used to perform any necessary power conversions including one or more of AC-AC, AC-DC, DC-AC and DC-DC. The power converter 230 may include several power converters at different locations in the system 100. The power converter(s) 230 may operate in a bi-directional manner so that one or more power conversions are bi-directional. As shown in FIG. 1, the power converter 230 is connected to AC and/or DC power sources and/or loads. The power converter 230 may also provide power to loads in the building 102, including the second units 250 (if in the building 102), the thermostat 260 and loads 270. In conventional modes, the loads in building 102 will receive AC power from the AC power grid directly. The controller 220 may choose whether the power will come from the AC power grid 302 or from the power converter 230. Example embodiments of the power converter 230 are described herein.

The energy storage device 240 is configured to provide, under certain circumstances, at least a portion of the power to operate one or more of components of the air conditioning system, such as the first unit 200, the second unit(s) 250, along with the indoor load(s) 270, and any other loads. The energy storage device 240 may be implemented using apparatus for storing electrical energy including one or more of, for example, a battery, battery modules, battery cells, capacitors, supercapacitors, etc. The battery 240 may include several cells in either modular form or as a stand-alone, multi-cell array. The battery 240 may be made of a single or multiple packaged self-contained systems, battery modules or individual cells. The battery 240, such as a complete plug and play battery, may include a box, wires, cells, and modules. For example, the battery 240 may include a group of cells configured into a self-contained mechanical and electrical unit. The energy storage device 240 may include other components (e.g., an ESD management system (ESDMS)) that are electrically coupled to the energy storage device 240 and may be adapted to communicate directly or through the ESDMS to controller 220.

The first unit 200 also includes components used as part of the air conditioning system, and includes a compressor 242, one or more drives 244, a fan 246, and other loads 248, and a control unit (not shown). A heat exchanger (not shown) in the first unit 200 may act as evaporator or condenser/gas cooler. These components are described in further detail herein when relevant to embodiments.

In a split system, inside the building 102, one or more second units 250 are positioned to condition one or more zones of the building 102. The second units 250 may be employed using a variety of known second units, including variable air volume (VAV) units, liquid cooled second units, fan coil units, furnaces, air handler (s), etc., which usually include heat exchangers. In other types of systems (e.g., packaged or chillers) the second unit(s) 250 may be located outdoors and include any form of heat exchangers such as cooling towers, etc.

An optional thermostat 260 provides a user interface for the air conditioning system, and allows the user to enter operational modes of the air conditioning system, enter setpoints for various zones of the air conditioning system, etc. The indoor loads 270 may be supplied electrical power by the first unit 200. The indoor loads 270 include a wide variety of loads, such as appliances, lighting, electric vehicle chargers, etc. A thermostat 260 is not required and other techniques may be used for control of the air conditioning system.

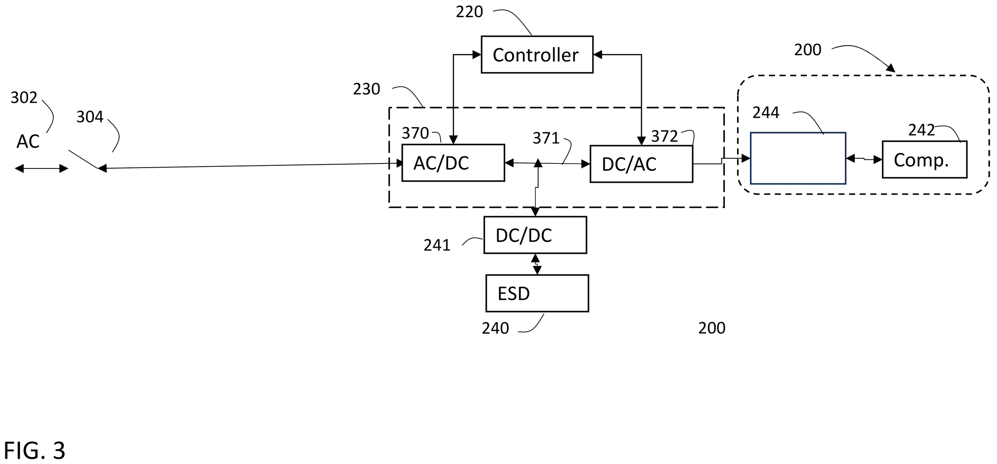

FIG. 3 depicts an electrical architecture for a first unit 200 in an example embodiment. The location of components in FIG. 3 is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the disclosure.

Not all components of the first unit 200 are shown for ease of illustration and explanation. As shown in Figure 3, AC power from an AC power grid 302 is supplied through a grid disconnect 304 to a power converter 230. The power converter 230 includes an AC/DC converter 370 and a DC/AC converter 372. The output of the DC/AC converter 372 is provided to the compressor 242, through a compressor drive 244. If the compressor 242 is fixed speed, the compressor drive 244 may be a switch, such as a contactor or relay. If the compressor 242 is variable speed, the compressor drive 244 may be a variable frequency drive (VFD) configured to provide the proper drive signals to the compressor 242 under control of the controller 220. The power converter 230 and the drive 244 may be part of a common assembly.

Both the AC/DC converter 370 and the DC/AC converter 372 operate under the control of the controller 220. Between the AC/DC converter 370 and the DC/AC converter 372 is a DC link 371 that is connected to the energy storage device 240, optionally through the DC/DC converter 241. Under this arrangement, the energy storage device 240 may be charged by the power converter 230. Alternatively, the energy storage device 240 may provide DC power to the DC link 371 to power the DC/AC converter 372 and the compressor 242. This allows the first unit 200 to operate independent of, or in conjunction with, the AC power grid 302. The AC/DC converter 370 may be bi-directional to allow the energy storage device 240 to provide power to, and be charged from, the AC power grid 302.

The controller 220, the power converter 230, the energy storage device 240, and the DC/DC converter 241 may be retrofit to an existing first unit 200. This allows the energy storage device 240 to be added to existing air conditioning systems to enable the first unit 200 to operate independent of the AC power grid 302 or operate under power from both the AC power grid 302 and the energy storage device 240. It allows also for auxiliary power sources to be added in a modular way.

The electrical architecture of FIG. 3 allows one or more components of the air conditioning system (first unit 200 and/or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads can be powered exclusively by the AC power grid 302, exclusively by the energy storage device 240, or powered by both the energy storage device 240 and the AC power grid 302.

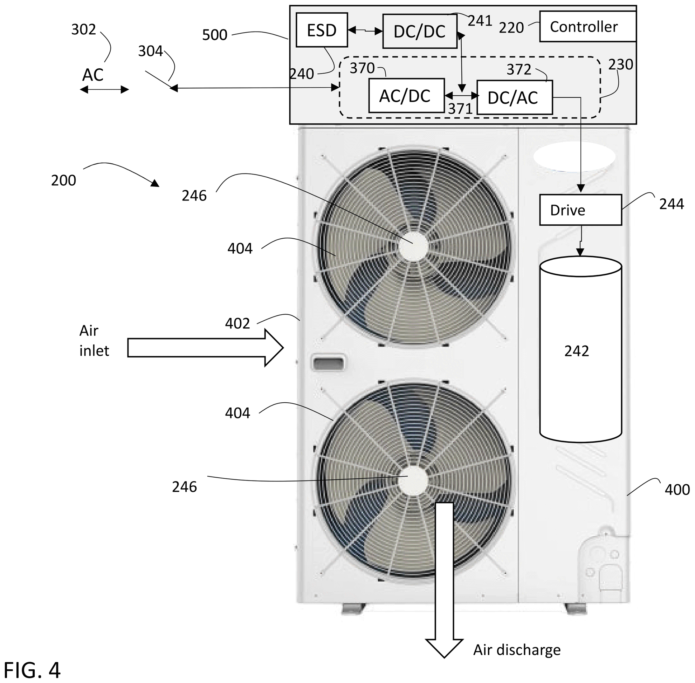

FIG. 4 depicts a physical layout of a first unit 200. FIG. 4 depicts a side discharge first unit 200 (e.g., an outdoor unit) with an integrated energy storage device 240 in an example embodiment. The first unit 200 includes a housing 400 that includes typical components of an air conditioning system including the compressor 242, drive 244, fan(s) 246, heat exchanger(s) (not shown), expansion device (not shown), etc. The first unit 200 is a side discharge unit, meaning outside air is drawn into the first unit 200 through a side air inlet 402 and air is discharged from the first unit 200 through one or more side air outlet(s) 404.

An enclosure 500 is positioned on a top surface of the first unit 200. The enclosure 500 includes the energy storage device 240, optional DC-DC converter 241, the power converter 230 and the controller 220. The enclosure 500 may include other components not shown for ease of illustration. The enclosure 500 may be a weatherproof enclosure designed to protect electronic components from environmental factors such as moisture, dust, temperature fluctuations, and physical damage. The enclosure 500 may include gaskets or seals around the edges of doors and panels to prevent the ingress of water and dust. These seals may be made from rubber or silicone to ensure a tight fit. To manage heat dissipation, the enclosure 500 may include vents or louvers that allow for airflow while still preventing the entry of water and debris. The enclosure 500 may include filters to maintain clean airflow through the enclosure.

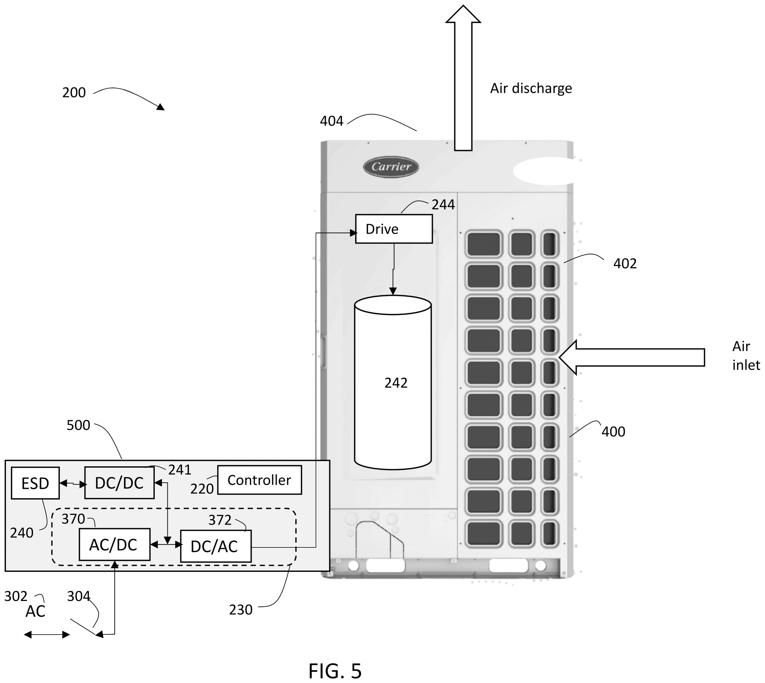

FIG. 5 depicts a physical layout of a first unit 200 in another embodiment. FIG. 5 depicts a top discharge first unit 200 (e.g., an outdoor unit) with an integrated energy storage device 240 in an example embodiment. The first unit 200 includes a housing 400 that includes typical components of an air conditioning system including the compressor 242, drive 244, fan(s) (not shown), heat exchanger(s) (not shown), expansion device (not shown), etc. The first unit 200 is a top discharge unit, meaning outside air is drawn into the first unit 200 through a side air inlet 402 and air is discharged from the first unit 200 through one or more top air outlet(s) 404.

An enclosure 500 may be positioned in multiple location. In an example embodiment, the enclosure 500 is positioned on the side of the housing 400 and external to the first unit 200. In another example embodiment, the enclosure 500 is positioned on inside the housing 400 and at the bottom of the housing 400. The enclosure 500 includes the energy storage device 240, optional DC-DC converter 241, the power converter 230 and the controller 220. The enclosure 500 may include other components not shown for ease of illustration. The enclosure 500 may be a weatherproof enclosure designed to protect electronic components from environmental factors such as moisture, dust, temperature fluctuations, and physical damage. The enclosure 500 may include gaskets or seals around the edges of doors and panels to prevent the ingress of water and dust. These seals may be made from rubber or silicone to ensure a tight fit. To manage heat dissipation, the enclosure 500 may include vents or louvers that allow for airflow while still preventing the entry of water and debris. The enclosure 500 may include filters to maintain clean airflow through the enclosure.

The energy storage device 240 may have a preferred operating temperature range. Excessively high or low temperatures can negatively affect the performance of the energy storage device 240.

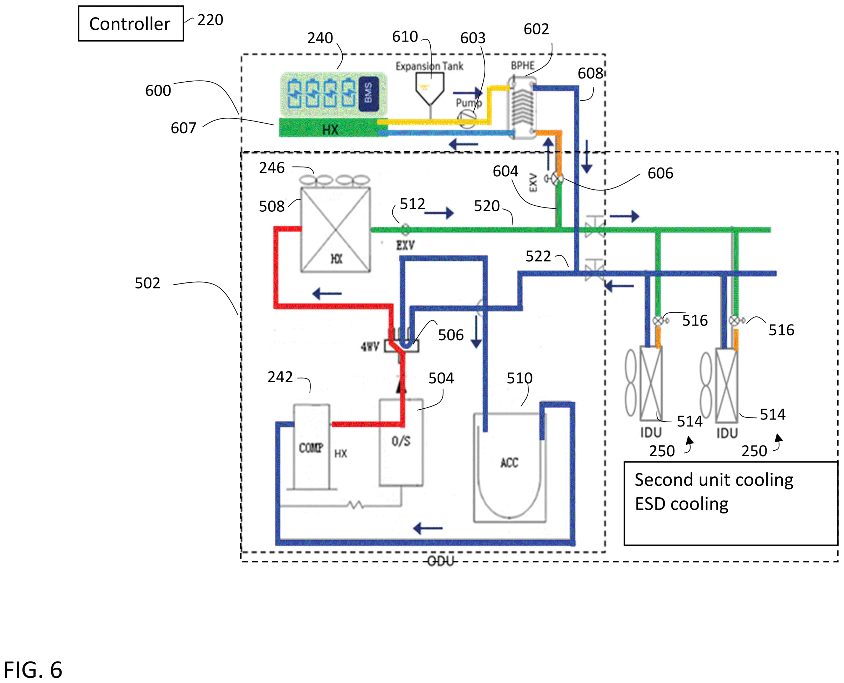

FIG. 6 depicts a system including a temperature management system 600 using a fluid circuit for controlling temperature of the energy storage device 240. The system includes an air conditioning system 502 and a thermal management system 600. The air conditioning system 502 provides, for example, cooling or heating to a building housing one or more second units 250. The thermal management system 600 provides, for example, heating and cooling, to the energy storage device 240 to maintain the energy storage device 240 within a proper operating temperature range.

The air conditioning system 502 may be a VRF system. The air conditioning system 502 includes compressor 242. A discharge port of the compressor 242 is connected to an oil separator 504 which directs oil back to the compressor 242 and directs refrigerant to a four-way valve 506. In some embodiments, the oil separator 504 is not used.

As known in the art, the four-way valve 506 allows the air conditioning system 502 to operate in various modes, including heating and cooling at the second unit(s) 250. The four-way valve 506 includes ports connected to the discharge port of the compressor 242 (through the oil separator 504), a first heat exchanger 508, a suction port of the compressor (through an accumulator 510) and second unit(s) 250. In some embodiments, the accumulator 510 is not used.

Each second unit 250 incudes a second heat exchanger 514. A first expansion device 512 is positioned along a first pipe 520 between the first heat exchanger 508 and the second unit(s) 250. The first pipe 520 fluidly couples the first heat exchanger 508 with the second heat exchanger(s) 514. The first expansion device 512 may be an electronic expansion device, having a degree of opening (including fully open or fully closed) controlled by the controller 220. A second expansion device 516 is positioned between the first heat exchanger 508 and each second heat exchanger 514. The second expansion device 516 may be an electronic expansion device, having a degree of opening (including fully open or fully closed) controlled by the controller 220.

The thermal management system 600 includes a third heat exchanger 602. The third heat exchanger 602 is a liquid-to-refrigerant heat exchanger, having a liquid pass and a refrigerant pass in thermal communication. A first conduit 604 is connected between the refrigerant pass of the third heat exchanger 602 and the first pipe 520 of the air conditioning system 502. A third expansion device 606 is positioned in the first conduit 604. The third expansion device 606 may be an electronic expansion device, having a degree of opening (including fully open or fully closed) controlled by the controller 220. A second conduit 608 is connected between the refrigerant pass of the third heat exchanger 602 and a second pipe 522 of the air conditioning system 502. The second pipe 522 fluidly couples the second heat exchanger(s) 514 with a port on the four-way valve 506.

A fluid circuit in the thermal management system 600 circulates a liquid (e.g., water with antifreeze such as glycol) between a liquid pass of the third heat exchanger 602 and a fourth heat exchanger 607. The fourth heat exchanger 607 is positioned near the energy storage device 240 to provide heating or cooling to the energy storage device 240, as needed. The energy storage device 240 may be mounted on a surface of the fourth heat exchanger 607, and generally is in thermal communication with the fourth heat exchanger 607. An expansion tank 610 may be connected to the fluid loop between the third heat exchanger 602 and the fourth heat exchanger 607. A pump 603 is used to circulate the liquid between the third heat exchanger 602 and the fourth heat exchanger 607.

The controller 220 operates the air conditioning system 502 and the thermal management system 600 in various modes depending on operational needs. The controller 220 is in communication with components of the air conditioning system 502 and the thermal management system 600 via communication links (e.g., wired or wireless), which are not shown in FIG. 6 for ease of illustration. The controller 220 may receive a demand for cooling or heating at the second unit(s) 250 (e.g., based on a signal from thermostat 260). The controller 220 may receive a temperature of the energy storage device 240 (e.g., from a temperature sensor) and determine that heating or cooling of the energy storage device 240 is needed.

FIG. 6 depicts the system operating in a mode where the second unit(s) 250 provide cooling and the energy storage device 240 is cooled. The system operates under control of the controller 220. Refrigerant from the compressor 242 is supplied through the four-way valve 506 to the first heat exchanger 508, which acts as a condenser or gas cooler. From the first heat exchanger 508, refrigerant flows to first pipe 520. The first expansion valve 512 is fully open, meaning no significant pressure drop occurs over the first expansion valve 512.

Refrigerant flows to the second expansion device(s) 516, the opening of which is controlled to create a pressure drop in the refrigerant. The second heat exchanger(s) 514 act as evaporators to vaporize the refrigerant and cool air passing over the second heat exchanger(s) 514. Refrigerant flows to the second pipe 522, to the four-way valve 506 and back to the suction port of the compressor 242, via the accumulator 510, if present.

A portion of the refrigerant in first pipe 520 flows through first conduit 604 and third expansion device 606, the opening of which is controlled to create a pressure drop in the refrigerant. The refrigerant pass of the third heat exchanger 602 operates as an evaporator vaporizing the refrigerant and cooling liquid in a liquid pass of the third heat exchanger 602. Refrigerant exits the third heat exchanger 602 through second conduit 608, flows to the second pipe 522, to the four-way valve 506 and back to the suction port of the compressor 242, via the accumulator 510, if present.

Fluid in the fluid loop of the thermal management system 600 is moved by pump 603, circulating the liquid through the liquid pass of the third heat exchanger 602 and the fourth heat exchanger 607. The liquid absorbs heat from the energy storage device 240 and liquid is then cooled at the third heat exchanger 602. If the temperature of the energy storage device 240 has reached a suitable level, the third expansion device 606 may be closed to prevent refrigerant from reaching the third heat exchanger 602 and the pump 603 stopped. Cooling at the second unit(s) 250 may continue, even if the energy storage device 240 is not being cooled.

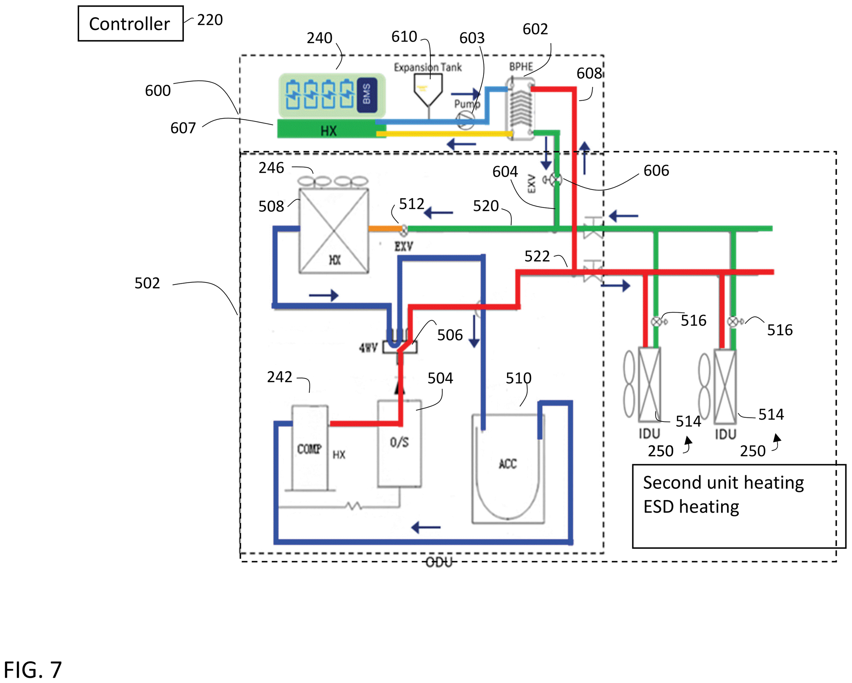

FIG. 7 depicts the system of FIG. 6 operating in a mode where the second unit(s) 250 provide heating and the energy storage device 240 is heated. The system operates under control of the controller 220. Refrigerant from the compressor 242 is supplied through the four-way valve 506 to the second heat exchanger(s) 514, which acts as a condenser or gas cooler to heat air passing over the second heat exchanger(s) 514. From the second heat exchanger(s) 514, refrigerant flows to first pipe 520. The refrigerant flows through the first expansion valve 512, the opening of which is controlled to create a pressure drop in the refrigerant.

The first heat exchanger 508 acts as an evaporator to vaporize the refrigerant, which cools air passing over the first heat exchanger 508. Refrigerant flows to the four-way valve 506 and back to the suction port of the compressor 242, via the accumulator 510, if present.

A portion of the refrigerant in the second pipe 522 flows through the second conduit 608. The refrigerant pass of the third heat exchanger 602 operates as condenser or gas cooler, adding heat to the liquid in the liquid pass of the third heat exchanger 602. Refrigerant exits the third heat exchanger 602 through first conduit 604, flows to the first pipe 520 through third expansion device 606, which is fully open meaning no significant pressure drop occurs.

Fluid in the fluid loop of the thermal management system 600 is moved by pump 603, circulating the liquid through the liquid pass of the third heat exchanger 602 and the fourth heat exchanger 607. The liquid absorbs heat from the refrigerant pass of the third heat exchanger 602 and supplies heat to the energy storage device 240 through the fourth heat exchanger 607. If the temperature of the energy storage device 240 has reached a suitable level, the third expansion device 606 may be closed to prevent refrigerant from flowing in the refrigerant pass of the third heat exchanger 602 and the pump 603 stopped. Heating at the second unit(s) 250 may continue, even if the energy storage device 240 is not being heated.

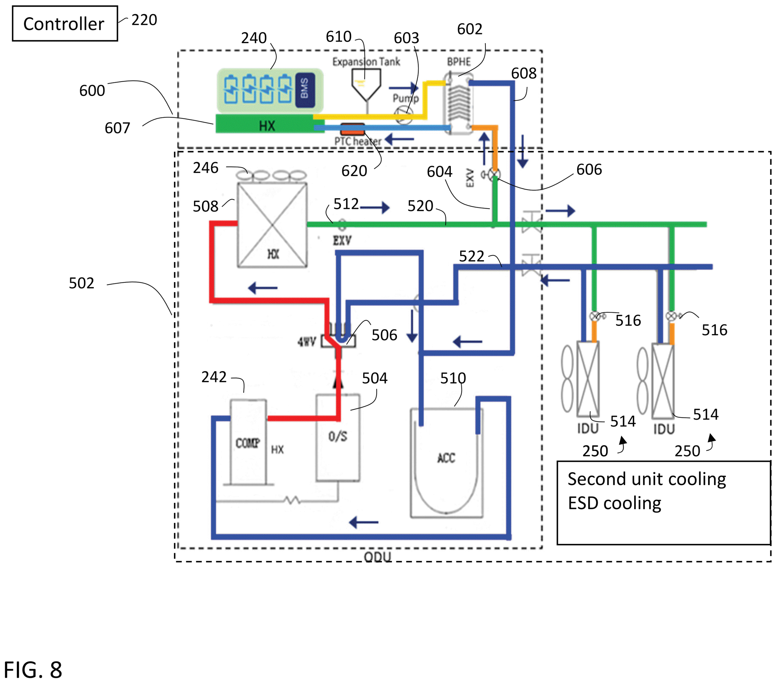

FIG. 8 depicts a system including a temperature management system 600 using a fluid circuit for controlling temperature of the energy storage device 240. The system of FIG. 8 is similar to that in FIG. 6 with the exception of a heater 620 added to the fluid circuit in the thermal management system 600. The heater 620 may be an electrically powered heater, such as a PTC heater. The heater 620 is position in the fluid circuit in the thermal management system 600 to heat liquid circulating between the third heat exchanger 602 and the fourth heat exchanger 607. The heater 620 may be position about a pipe circulating liquid between the third heat exchanger 602 and the fourth heat exchanger 607.

In FIG. 8, the second conduit 608 is not connected to the second pipe 522. The second conduit 608 is connected to the suction port of the compressor 242, through the accumulator 510, if present.

FIG. 8 depicts the system operating in a mode where the second unit(s) 250 provide cooling and the energy storage device 240 is cooled. In this mode, the heater 620 is not powered, and the system of FIG. 8 operates similarly to that in FIG. 6.

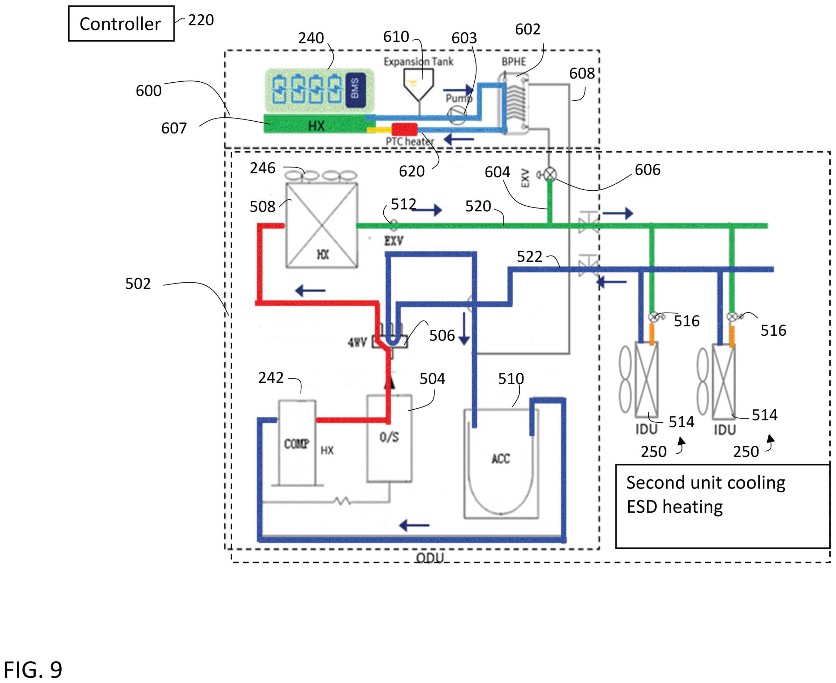

FIG. 9 depicts the system of FIG. 8 operating in a mode where the second unit(s) 250 provide cooling and the energy storage device 240 is heated. In this mode, the third expansion device 606 is closed to prevent refrigerant from reaching the third heat exchanger 602. The heater 620 is powered to heat fluid circulated by the pump 603 in the fluid circuit of the thermal management system 600. Heat is provided to the energy storage device 240 through the fourth heat exchanger 607. The air conditioning system 502 operates to provide cooling at the second unit(s) 250 as described with reference to FIG. 6.

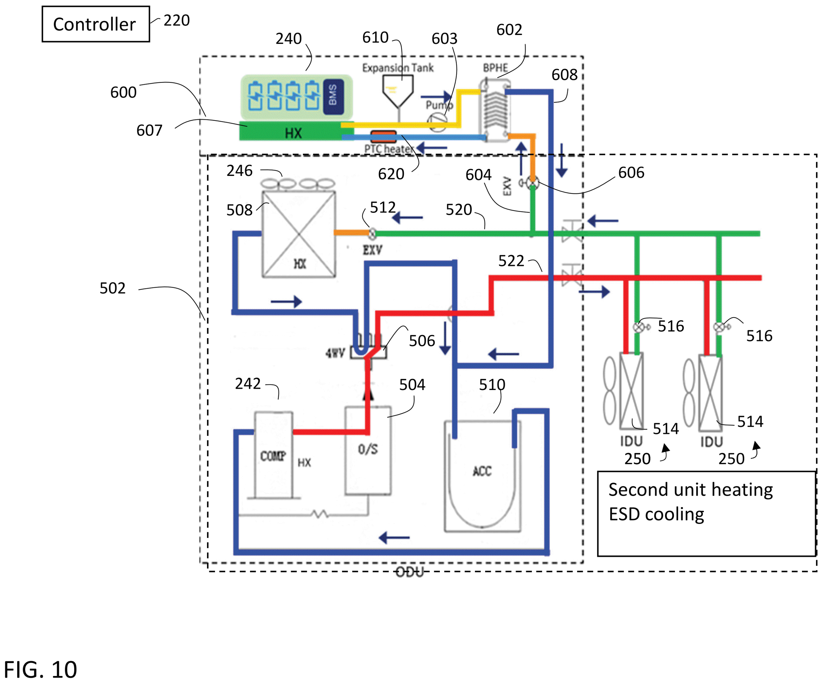

FIG. 10 depicts the system of FIG. 8 operating in a mode where the second unit(s) 250 provide heating and the energy storage device 240 is cooled. Refrigerant from the compressor 242 is supplied through the four-way valve 506 to the second pipe 522, to the second heat exchanger(s) 514, which acts as a condenser or gas cooler. From the second heat exchanger(s) 514, refrigerant flows to first pipe 520. The refrigerant flows through the first expansion valve 512, the opening of which is controlled to create a pressure drop in the refrigerant.

The first heat exchanger 508 acts as an evaporator to vaporize the refrigerant, which cools air passing over the first heat exchanger 508. Refrigerant flows to the four-way valve 506 and back to the suction port of the compressor 242, via the accumulator 510, if present.

A portion of the refrigerant in the first pipe 520 flows through the first conduit 604. The refrigerant flows through the third expansion device 606, the opening of which is controlled to create a pressure drop in the refrigerant.

The refrigerant pass of the third heat exchanger 602 operates as an evaporator, cooing the liquid in the liquid pass of the third heat exchanger 602. Refrigerant exits the third heat exchanger 602 through second conduit 608, flows to the suction port of the compressor 242, via the accumulator 510, if present.

In the thermal management system 600, the heater 620 is not powered. Fluid in the liquid loop of the thermal management system 600 is moved by pump 603, circulating the liquid through the liquid pass of the third heat exchanger 602 and the fourth heat exchanger 607. The liquid absorbs heat from the energy storage device 240 and liquid is then cooled at the third heat exchanger 602. If the temperature of the energy storage device 240 has reached a suitable level, the third expansion device 606 may be closed to prevent refrigerant from reaching the third heat exchanger 608 and the pump 603 stopped. Heating at the second unit(s) 250 may continue, even if the energy storage device 240 is not being cooled.

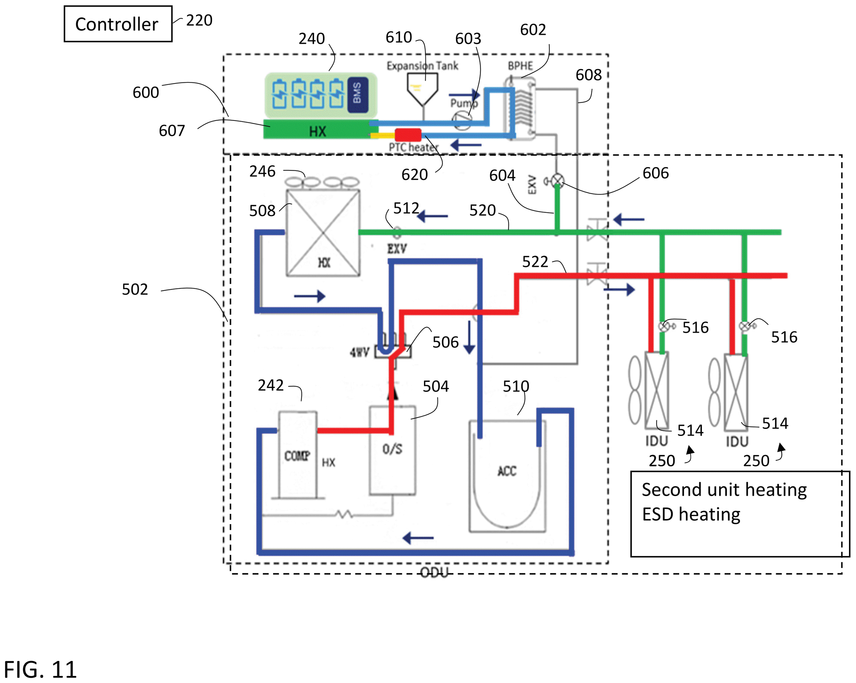

FIG. 11 depicts the system of FIG. 8 operating in a mode where the second unit(s) 250 provide heating and the energy storage device 240 is heated. The heater 620 is powered on. The third expansion device 606 is closed. The air conditioning system 502 operates as described with reference to FIG. 10. The thermal management system 600 operates as described with reference to FIG. 9.

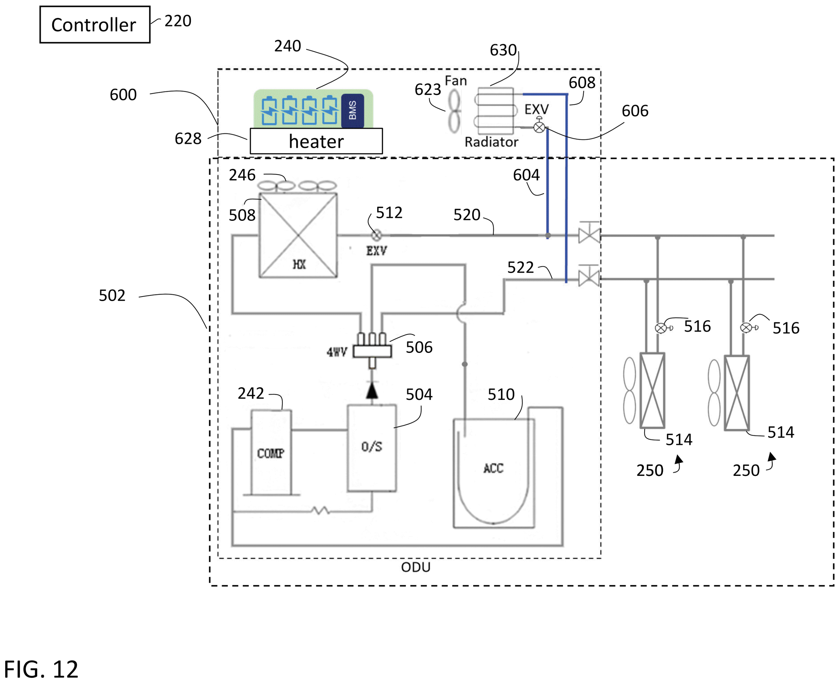

FIG 12 depicts a system including a temperature management system 600 using a fluid circuit for controlling temperature of an energy storage device 240. The system includes an air conditioning system 502 and a thermal management system 600. In FIG. 12, the fluid in the temperature management system 600 is air, rather than liquid.

The air conditioning system 502 is similar to that shown in FIG. 6, with the fluid in the temperature management system 600 being air. The temperature management system 600 uses a third heat exchanger 630 which is an air-to-refrigerant heat exchanger. A fan 623 directs air to the energy storage device 240. The fan 623 may push or pull air over the third heat exchanger 630. The fan 623, and the circulated air, are part of a fluid circuit for controlling temperature of the energy storage device 240.

The thermal management system 600 may include a heater 628 to provide heat to the energy storage device 240. The heater 628 may be an electrically powered heater, operated under controller of the controller 220. The heater 628 is located adjacent to the energy storage device 240 and directly heats the energy storage device 240. The heater 628 may be located in air flow provided by the fan 623, the heater 628 upstream of the energy storage device 240.

In FIG. 12, the first conduit 604 is connected to the first pipe 520 and the second conduit 608 is connected to the second pipe 522, similar to FIG. 6 and FIG 7. The system of FIG. 12 may operate in the modes described above, including (i) second unit 250 cooling and energy storage device 240 cooling, (ii) second unit 250 heating and energy storage device 240 heating (iii) second unit 250 cooling and energy storage device 240 heating and (iv) second unit 250 heating and energy storage device 240 cooling.

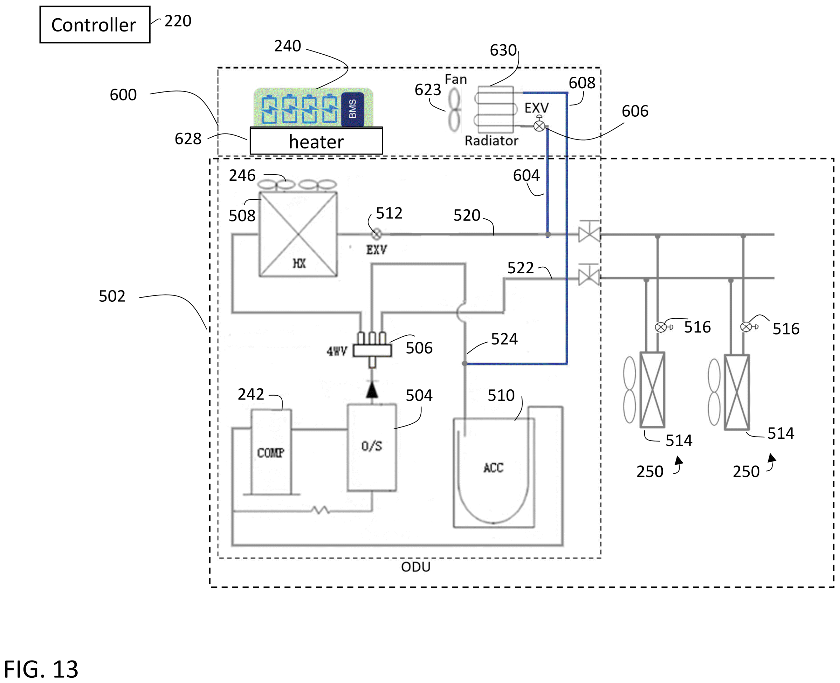

FIG. 13 depicts a system including a temperature management system 600 using a fluid circuit for controlling temperature of an energy storage device 240. The system of FIG. 13 is similar to that in FIG. 12, with the difference being that the second conduit 608 is connected to a suction port of the compressor 242, via the accumulator 510, if present. The system of FIG. 13 may operate in the modes described above, including (i) second unit 250 cooling and energy storage device 240 cooling, (ii) second unit 250 heating and energy storage device 240 heating (iii) second unit 250 cooling and energy storage device 240 heating and (iv) second unit 250 heating and energy storage device 240 cooling.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

**1.** A system comprising:
an air conditioning system (502) including:
a first unit (200) having a compressor (242) and a first heat exchanger (508);
a second unit (250) having a second heat exchanger (514), wherein the air conditioning system (502) is configured to circulate a refrigerant between the first unit (200) and the second unit (250);
an energy storage device (240) configured to power the compressor (242);
a controller (220); and
a thermal management system (600) having a third heat exchanger (602; 630), the third heat exchanger (602; 630) configured to receive refrigerant from the air conditioning system (502) in certain modes of operation;
wherein the thermal management system (600) is configured to supply fluid to the energy storage device (240) to provide one of heating and cooling of the energy storage device (240).

**2.** The system of claim 1, wherein the fluid is a liquid, and the third heat exchanger (602) is a liquid-to-refrigerant heat exchanger having a fluid pass and a refrigerant pass.

**3.** The system of claim 2, wherein the thermal management system (600) includes a pump (603) and a fourth heat exchanger (607), wherein the pump (603) is configured to circulate the liquid between the liquid pass of the third heat exchanger (602) and the fourth heat exchanger (607).

**4.** The system of claim 3, wherein the thermal management system (600) includes an electric heater (620) configured to heat the liquid circulating between the fourth heat exchanger (607) and the third heat exchanger (602).

**5.** The system of claim 2, 3 or 4, further comprising:
a first conduit (604) connecting the refrigerant pass to a first pipe (520) of the air conditioning system (502);
a second conduit (608) connecting the refrigerant pass to a second pipe (522) of the air conditioning system (502); and
an expansion device (606) positioned in the first conduit (604).

**5.** The system of claim 2, 3 or 4, further comprising:
a first conduit (604) connecting the refrigerant pass to a first pipe (520) of the air conditioning system (502);
a second conduit (608) connecting the refrigerant pass to a suction port of the compressor (242); and
an expansion device (606) positioned in the first conduit (604).

**6.** The system of claim 1, wherein the fluid is air, and the third heat exchanger (630) is an air-to-refrigerant heat exchanger having a refrigerant pass.

**7.** The system of claim 6, wherein the thermal management system (600) includes a fan (623), wherein the fan (623) is configured to direct air over the third heat exchanger (630) and towards the energy storage device (240).

**8.** The system of claim 6 or 7, wherein the thermal management system (600) includes an electric heater (620; 628).

**9.** The system of any preceding claim, wherein the controller (220) is configured to operate the system to cool the energy storage device (240) and provide cooling at the second unit (250).

**10.** The system of any preceding claim, wherein the controller (220) is configured to operate the system to heat the energy storage device (240) and provide cooling at the second unit (250).

**11.** The system of any preceding claim, wherein the controller (220) is configured to operate the system to cool the energy storage device (240) and provide heating at the second unit (250).

**12.** The system of any preceding claim, wherein the controller (220) is configured to operate the system to heat the energy storage device (240) and provide heating at the second unit (250).
